# EUROPÄISCHE PATENTSCHRIFT

(11) **EP 3 072 743 B1**
(45) Veröffentlichungstag und Bekanntmachung des Hinweises auf die Patenterteilung: **07.06.2023**
(21) Anmeldenummer: 16154214.7
(22) Anmeldetag: 04.02.2016
(51) Int. Cl.: B60Q 3/14, B60Q 3/16, B60R 13/02, B60Q 3/225, B60Q 3/54, B60Q 3/64, B60Q 3/80

(54) **INNENVERKLEIDUNGSTEIL FÜR EIN KRAFTFAHRZEUG**
INTERIOR LINING COMPONENT FOR A MOTOR VEHICLE
ÉLEMENT D'HABILLAGE INTERIEUR POUR UN VEHICULE AUTOMOBILE

(30) Priorität: 23.03.2015 DE 102015104299
(43) Veröffentlichungstag der Anmeldung: 28.09.2016
(73) Patentinhaber: International Automotive Components Group GmbH, 40472 Düsseldorf (DE)
(72) Erfinder: Cannon, Carter, 80539 München (DE)
(74) Vertreter: Liesegang, Eva

(56) Entgegenhaltungen:
- DE-A1- 10 240 270
- DE-A1-102005 047 500
- DE-A1-102010 043 960
- DE-A1-102012 111 187
- DE-A1-102013 100 941
- FR-A1- 2 920 120
- FR-A1- 2 936 588

## Beschreibung

Die Erfindung betrifft ein Innenverkleidungsteil für ein Kraftfahrzeug, das eine Beleuchtung für den Innenraum des Kraftfahrzeugs bereitstellen kann.

Innenbeleuchtungssysteme für Kraftfahrzeuge können für die Raumbeleuchtung oder als Umgebungslicht im Innenraum des Kraftfahrzeuges eingesetzt werden, sie können in Form einer Hintergrundbeleuchtung realisiert sein, oder/oder sie werden zum Beleuchten einzelner Objekte verwendet, wobei die Beleuchtung rein ästhetische Funktion oder auch technische Funktion haben kann, um z.B. das Auffinden und/oder Bedienen verschiedener Komponenten im Innenraum des Kraftfahrzeuges zu erleichtern. Für die Innenbeleuchtung wurden früher in der Regel Glühbirnen verwendet, und zwar sowohl für die Hintergrundbeleuchtung als auch für die Beleuchtung einzelner Objekte. Zunehmend werden für die Beleuchtung LEDs und Elektrolumineszenzfolien eingesetzt. Es ist ferner bekannt, Beleuchtungssysteme in die Innenverkleidungsteile zu integrieren und einzubetten, wobei hierbei verschiedenen Einschränkungen beachtet werden müssen, wie die Wärmeerzeugung durch die Beleuchtungssysteme, die Anfälligkeit der Beleuchtungssysteme gegen Beschädigung und auch die Unterbringung der Beleuchtungssysteme derart, dass sie unauffällig sind und sich gut in die Innenverkleidungsteile integrieren.

Die EP 2 228 258 A2 der Anmelderin beschreibt die Integration von LEDs und zugehöriger Ansteuerelektronik in Innenverkleidungsteile. Ein relativ dünnes gedrucktes LED-Hintergrundbeleuchtungsbauteil mit integriertem Diffuser wird in einem Formungsprozess in ein Innenverkleidungsteil integriert. Die eigentliche Lichtquelle des LED-Hintergrundbeleuchtungs-Bauteils wird hinter einer Gewebeoberfläche oder einem Gitter verborgen oder bildet direkt die Außenfläche des Innenverkleidungsteils, um eine Beleuchtung bereitzustellen. Eine ähnliche Anordnung ist aus der DE 10 2010 036 795 A1 bekannt.

Die US RE 42 340 E beschreibt ein Innenbeleuchtungssystem für ein Kraftfahrzeug, das Elektrolumineszenzplatten verwendet, die zwischen einem Trägersubstrat und einer Deckschicht angeordnet sind, wobei die Deckschicht lichtdurchlässig ist. In dem Trägersubstrat oder der Deckschicht können Ausnehmungen zur Aufnahme der Elektrolumineszenzplatte vorgesehen sein, so dass diese sich durch das Material der Deckschicht nicht abzeichnet und von außen nicht wahrnehmbar ist.

Auch die EP 2 233 366 A1 beschreibt ein Innenverkleidungsteil mit einer hinterleuchteten Dekorschicht, wobei zwischen Trägersubstrat und Dekorschicht eine Licht leitende Schicht eingebracht ist.

Die DE 10 2012 111 187 A1 beschreibt ein lichtdurchlässiges Formteil mit einem Träger und einer auf dem Träger laminierten Dekorschicht, wobei Träger und Dekorschicht transparent sind. Die Lichtdurchlässigkeit des gesamten Formteils ist mit 10% - 90%, bevorzugt 30% - 80% und besonders bevorzugt 50% - 75% angegeben.

Die FR 2 920 120 A1 beschreibt ein Formteil mit einem Träger und einem transluzenten Einsatz in dem Träger, auf den eine Deckschicht 18 aufgebracht ist. Die Deckschicht hat eine Lichtdurchlässigkeit im Bereich von 5% - 40%. Die Gesamtlichtdurchlässigkeit des Formteils ist nicht angegeben.

Die DE 10 2010 934 960 A1 beschreibt eine Soft-Touch-Beschichtung für ein Innenverkleidungsteil mit einer Lichtdurchlässigkeit im Bereich von 18% - 50%. Das Trägerbauteil des Innenverkleidungsteils ist nicht beschrieben.

Bei den Beleuchtungssystemen, die in eine Innenverkleidung eines Kraftfahrzeugs integriert sind, befindet sich die Licht leitende und Licht emittierende Schicht stets zwischen dem Trägersubstrat, das die Kontur der Innenverkleidung bestimmt, und einer ein- oder mehrlagigen Deckschicht. Durch Einbetten der Licht emittierenden Schicht zwischen Trägersubstrat und Deckschicht ist die Licht emittierende Schicht im ausgeschalteten Zustand im Wesentlichen nicht wahrnehmbar, und sie ist zwischen Deckschicht und Trägersubstrat geschützt. Diese Systeme haben jedoch auch eine Reihe von Nachteilen. Um die Licht emittierende Schicht mit einer zugehörigen Ansteuerelektronik und/oder Lichtquellen zu verbinden und/oder mit Strom zu versorgen, werden Anschlüsse der Licht emittierenden Schicht in das Trägersubstrat integriert oder auf die Rückseite des Trägersubstrates geführt, so dass sie bei Bedarf für Wartung und Austausch zugänglich sind. Hiermit befasst sich die DE 10 2010 036 795 A1.

Die DE 10 2013 100 941 A1 der Anmelderin beschreibt ein Innenverkleidungsteil für ein Kraftfahrzeug mit einem Trägerbauteil, das die Kontur des Innenverkleidungsteils bestimmt, einer Deckschicht, die auf die Frontseite des Trägerbauteils aufgebracht ist, und einer Licht emittierende Schicht, die auf der Rückseite des Trägerbauteils angeordnet ist, wobei das Trägerbauteil und die Deckschicht lichtdurchlässig sind. Durch die Anordnung der Lichtquelle auf der Rückseite des Trägerbauteils ist diese besser geschützt als bei dem oben beschriebenen Stand der Technik.

Es ist eine Aufgabe der Erfindung, ein Innenverkleidungsteil für ein Kraftfahrzeug anzugeben, das weitere Einsatzmöglichkeiten des Innenverkleidungsteils eröffnet.

Die Erfindung sieht ein Innenverkleidungsteil gemäß Anspruch 1 vor, wobei Ausgestaltungen in den abhängigen Ansprüchen angegeben sind.

Gemäß einem Aspekt sieht die Erfindung ein Innenverkleidungsteil für ein Kraftfahrzeug vor, das einen transluzenten Träger, auch Trägerbauteil genannt, mit einer Vorderseite und einer Rückseite, eine aus einem transluzenten Deckmaterial gebildete transluzente Deckschicht auf der Vorderseite des Trägers und eine Lichtquelle auf der Rückseite des Trägers umfasst. Das transluzente Deckmaterial hat vorzugsweise eine Shore A Härte im Bereich von 60 bis 80, beispielsweise von etwa 70, und hat dadurch eine weiche Oberflächenhaptik. Das Innenverkleidungsteil umfasst wenigstens eine beleuchtete Fläche eines Ablagefachs oder Staufachs des Kraftfahrzeugs, nämlich die Fläche, auf der Gegenstände abgelegt werden. Durch die weiche Oberfläche wird verhindert, dass abgelegte Gegenstände klappern oder andere unerwünschte Geräusche erzeugen und/oder verrutschen. Die Lichtquelle ist so angeordnet, dass sie die für Fahrer oder Passagiere des Kraftfahrzeugs sichtbare Ablagefläche beleuchtet. Durch eine Hintergrundbeleuchtung eines Ablagefachs mit weicher Haptik können Ablagefächer oder Staufächer in Kraftfahrzeugen bereitgestellt werden, die für die Passagiere des Kraftfahrzeugs eine verbesserte User Experience erzielen. Das Ablagefach und Gegenstände darin können leichter gefunden werden, und die Gegenstände sind sicherer aufbewahrt.

Gemäß der Erfindung umfasst ein Innenverkleidungsteil für ein Kraftfahrzeug einen transluzenten Träger mit einer Vorderseite und einer Rückseite, eine aus einem transluzenten Deckmaterial gebildete transluzente Deckschicht auf der Vorderseite des Trägers und eine Lichtquelle auf der Rückseite des Trägers, wobei der Verbund aus dem Träger und der transluzenten Deckschicht eine Lichtdurchlässigkeit T (Transmissionsgrad) von 5% bis 10% für sichtbares Licht, z.B. in einem Wellenlängenbereich von 400 nm bis 700 nm hat. Es hat sich gezeigt, dass schon mit einer Lichtquelle mit einer relativ geringen Leuchtkraft, z. B. eine 0,5 Watt LED, eine Leuchtdichte (Luminanz) des Innenverkleidungsteils von 2 bis 4 cd/m² (cd = Candela) oder sogar von 2 bis 5 cd/m² und somit eine gute Hintergrundbeleuchtung erreicht werden kann, wobei das Beleuchtungssystem, solange es ausgeschaltet ist, im Innenraum des Kraftfahrzeugs nicht wahrnehmbar ist. Diese Art der Beleuchtung wird auch als hidden-until-lit bezeichnet.

Die genauen Werte der Lichtdurchlässigkeit der verschiedenen Komponenten des Innenverkleidungsteils können variieren abhängig von der Art der Lichtquelle und gegebenenfalls verwendete Lichtleiter, von der Beschaffenheit und Dicke des Trägers und des Deckmaterials und auch von der Art der Befestigung des Deckmaterials an dem Träger. Auch ist die Lichtdurchlässigkeit unterschiedlich für verschiedene Wellenlängenbereiche, solange der Verbund aus dem Träger und der transluzenten Deckschicht eine Lichtdurchlässigkeit T (Transmissionsgrad) von 5% bis 10% im sichtbaren Wellenlängenbereich aufweist. Die Lichtdurchlässigkeit des Trägers kann deutlich größer sein als die Lichtdurchlässigkeit des Deckmaterials, beispielsweise um eine Faktor 10 oder mehr größer. Im Ergebnis können der transluzente Träger, das transluzente Deckmaterial und die Lichtquelle so aufeinander abgestimmt werden, dass eine Hintergrundbeleuchtung von zum Beispiel 2 bis 4 cd/m² oder 2 bis 5 cd/m² oder 5 bis 10 cd/m² oder von etwa 4 cd/m² oder etwa 5 cd/m² erzielt wird.

Gemäß einer weiteren Ausgestaltung sieht die Erfindung ein Innenverkleidungsteil für ein Kraftfahrzeug vor, mit einem transluzenten Träger mit einer Vorderseite und einer Rückseite, eine aus einem transluzenten Deckmaterial gebildete transluzente Deckschicht auf der Vorderseite des Trägers und einer Lichtquelle auf der Rückseite des Trägers, wobei die Lichtquelle ein Rückprojektionssystem umfasst, das über eine elektronische Steuereinrichtung ansteuerbar ist. Dies erlaubt es, auf der Fläche des Innenverkleidungsteils statische oder dynamische Bilder, Graphik, Animationen oder sogar Filme darzustellen. Es ermöglicht auch, die Darstellung abhängig von verschiedenen Nutzern des Kraftfahrzeuges zu personalisieren und individualisieren.

Die verschiedenen Aspekte der Erfindung, die oben allgemein beschrieben wurden und im Folgenden detailliert erläutert werden, können beliebig kombiniert werden, sofern es sich nicht um sich ausschließende technische Alternativen handelt.

Wenn das Innenverkleidungsteil ein Rückprojektionssystem umfasst, ist es möglich, als Steuereinrichtung ein von dem Kraftfahrzeug getrenntes Rechensystem zu verwenden, wie ein Smartphone, eine Smart-Watch, ein Tablett-Computer oder eine andere tragbare Recheneinrichtung. Dadurch ist es möglich, für jeden Nutzer des Fahrzeuges eine andere Art der Beleuchtung vorzusehen, einschließlich der Anzeige dynamischer Bilder, Filme, Navigationsinformation und anderes. Beispiele für Rückprojektionssysteme sind sogenannte Micro-, Nano- oder Pico-Projektoren, die RGB-Lasermodule verwenden, beispielsweise von der Fa. TriLite GmbH, Wien, AT. Ein weiterer Hersteller solcher Micro-, Nano- oder Pico-Projektoren ist die Apitek International, Willich, DE. Ein Beispiel eines Projektorsystems, das zum Einsatz kommen kann, ist der Pico Genie P50 LED-Projektor von AAXA Technologies Inc., CA; USA bzw. die ihn zugrundeliegende Technologie.

Wird kein Rückprojektionssystem verwendet, so kann als Lichtquelle beispielsweise eine Lichtleiterplatte oder Lichtleiterfaser oder ein polyoptisches Textil oder Vlies, zum Beispiel aus PMMA, eine Licht leitende Folie, ein an dem Träger angeformter Lichtleiter, eine LED-Lichtquelle, wie eine LED-Folie, eine Laserlichtquelle, eine Elektrolumineszenzkomponente, eine Lichtbox, gegebenenfalls Kombinationen hiervon mit einem Reflektor oder in Kombination zum Einsatz kommen, um nur einige Beispiele zu nennen.

Auf der A- und/oder der B-Seite der durch das Deckmaterial gebildeten Deckschicht, d.h. auf ihrer von Sichtseite (A) oder auf ihrer dem Träger zugewandten Rückseite (B), können in verschiedenen Ausgestaltungen eine Graphik, ein Bild, ein Muster, eine Struktur oder Kombinationen hiervon vorgesehen sein. Die Oberfläche kann genarbt oder auf andere Weise strukturiert sein. Es ist möglich, sowohl die A- als auch die B-Seite der Deckschicht zu bedrucken, beispielsweise durch Tintenstrahldrucken oder Siebedrucken. Graphik, Bilder, Muster, Strukturen und Kombinationen hiervon können auch in verschiedenen Ebenen der Deckschicht liegen, um einen 3D-Effekt oder Moire-Effekt zu erzielen.

In einigen Ausgestaltungen ist das Trägerbauteil nur dort, wo die beleuchtete Fläche vorgesehen wird, lichtdurchlässig und, um die beleuchtete Fläche herum lichtundurchlässig, beispielsweise durch Vorsehen einer lichtundurchlässigen Beschichtung oder Lackierung des Trägerbauteils. In anderen Ausgestaltungen ist in dem Trägerbauteil dort, wo die beleuchtete Fläche vorgesehen werden soll, ein Ausschnitt eingebracht, und in diesen Ausschnitt wird ein transluzenter Einsatz eingefügt.

Auf ihrer B-Seite kann die Deckschicht mit einer Unterschicht versehen sein, beispielsweise eine PO- oder PU-Schaumschicht oder mit einem Abstandsgewirke. Des Weiteren kann die Deckschicht auf ihrer A-Seite eine Schutzschicht, beispielsweise eine Lackierung aufweisen.

Wenn im Kontext dieser Beschreibung angegeben ist, dass einzelne Bauteile aus einem bestimmten Material bestehen, so bedeutet dies, dass das entsprechende Material die Hauptkomponente des Bauteils bilden kann, wobei weitere Bestandteile in kleineren Mengen vorhanden sein können. Auch Mischungen aus dem genannten Materialmit anderen Materialien sind möglich. Ferner können Zusätze z.B. in Form von UV-Stabilisatoren zur Verhinderung von Erosion und Ausbleichen, Farbstoffe und Pigmente zur Gestaltung des äußeren Erscheinungsbildes oder Schäume zur Gewichtsreduzierung eingesetzt werden

Es ist möglich, an die Deckschicht Befestigungsstrukturen anzuformen oder anzubringen, beispielsweise Clips, Stifte, Rasthaken und/oder Ösen.

Die Erfindung ist im Folgenden anhand verschiedener Ausgestaltungen mit weiteren Einzelheiten beschrieben.
Fig. 1a und 1b zeigen schematische perspektivische Darstellungen eines Beispiels eines Innenverkleidungsteils mit aus- und eingeschalteter Beleuchtung.
Fig. 2 zeigt eine auseinandergezogene Darstellung des Innenverkleidungsteils der Fig. 1;
Fig. 3a und 3b zeigen Schnittdarstellungen einer Ausgestaltung des Innenverkleidungsteils gemäß einem Beispiel, in auseinandergezogener und eine zusammengesetzter Form;
Fig. 4 zeigt eine Schnittdarstellung des Innenverkleidungsteils gemäß einem weiteren Beispiel;
Fig. 5 illustriert Möglichkeiten zur graphischen Gestaltung des Deckmaterials zur Erzielung eines Moire-Effekts gemäß einem Ausführungsbeispiel;
Fig. 6a und 6b zeigen Schnittdarstellungen einer Ausgestaltung des Innenverkleidungsteils gemäß einem weiteren Beispiel, in auseinandergezogener und eine zusammengesetzter Form;
Fig. 7a und 7b zeigen Schnittdarstellungen eines Innenverkleidungsteils gemäß einem nicht erfindungsgemäßen Beispiel, in auseinandergezogener und eine zusammengesetzter Form;
Fig. 8a, 8b und 8c zeigen schematisch verschiedene Beispiele der Gestaltung des Innenverkleidungsteils; und
Fig. 9 illustriert die Lichtdurchlässigkeit verschiedener Materialkombinationen.

Die Erfindung ist im Folgenden anhand verschiedener Beispiele erläutert. Die Merkmale der verschiedenen Ausgestaltungen können, sofern sie sich nicht technisch ausschließen und alle technische Merkmale des Anspruchs 1 beinhalten, beliebig miteinander kombiniert werden, einschließlich der Realisierung von Unterkombinationen. Die Tatsache, dass einzelne Ausgestaltungen als Kombinationen bestimmter Merkmale beschrieben werden, bedeutet nicht, dass die Erfindung auf die spezielle beschriebene Kombination beschränkt ist.

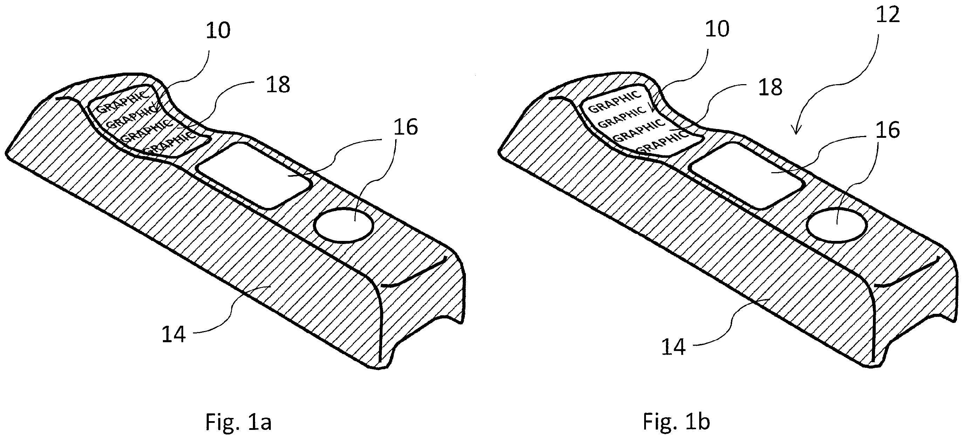

Die Fig. 1a und 1b zeigen ein Beispiel eines Innenverkleidungsteils für ein Kraftfahrzeug gemäß der Erfindung. In dem gezeigten Beispiel umfasst das Innenverkleidungsteil eine Ablagefläche 10, die Teil einer Mittelkonsole 12 ist. Die Mittelkonsole ist grundsätzlich aus einem Trägerbauteil 14 geformt, in das verschiedene Ausschnitte 16 für den Schalthebel, Steuereinrichtungen, Aufbewahrungsfächer und andere Installationen vorgesehen sind. Jedenfalls im Bereich der Ablagefläche 10 ist das Trägerbauteil 14 transluzent oder es weist einen Ausschnitt mit transluzentem Einsatz auf, wie weiter unten noch im Einzelnen erläutert ist. Im Bereich der Ablagefläche 10 befindet sich auf dem Trägerbauteil 14 oder dem Einsatz ein Deckmaterial 18, in dem Ausführungsbeispiel der Fig. 1a und 1b mit aufgedruckter Graphik, wie ebenfalls im Folgenden noch genauer erläutert ist.

Auf der Rückseite des Trägerbauteils 14 befindet sich im Bereich der Ablagefläche 10 eine Lichtquelle zur Beleuchtung der Ablagefläche 10. Fig. 1a zeigt die Mittelkonsole 12 mit ausgeschalteter Lichtquelle, und Fig. 1b zeigt die Mittelkonsole 12 mit eingeschalteter Lichtquelle, wobei durch die unterschiedliche Darstellungen visualisiert sein soll, dass die auf das Deckmaterial 18 aufgedruckte Graphik bei ausgeschalteter Lichtquelle nicht oder im Wesentlichen nicht sichtbar ist (Fig. 1a), während die aufgedruckte Graphik bei eingeschalteter Lichtquelle gut erkennbar ist (Fig. 1b). Dieser Effekt wird auch als hidden-until-lit bezeichnet. Die Beleuchtung der Ablagefläche 10 kann als Orientierungslicht und als Hintergrund- oder Raumbeleuchtung dienen. Dabei erfolgt die Beleuchtung durch mehrere Lagen transluzenten Materials, die wenigstens den transluzenten Träger oder Einsatz und das transluzente Deckmaterial umfassen.

Der Träger 14 der Mittelkonsole oder eines anderen Innenverkleidungsteils gemäß der Erfindung wird in manchen Ausgestaltungen aus einem transluzenten oder transparenten Material hergestellt, wie ABS (Akrylnitrylbutadienstyrol), PP (Polypropylen), PC-ABS (Polycarbonat-ABS) und andere Materialien für Trägerbauteile von Innenverkleidungsteilen. Das Material des transluzenten Trägers ist beispielsweise ein ursprünglich weißes oder weitgehend farbloses Material. Das Trägerbauteil kann durch Umformen, beispielsweise Spritzgießen oder Spritzpressen, Vakuumformen, Blasformen oder Rotationsformen oder andere Prozesse hergestellt werden. Das Trägerbauteil kann Teil eines größeren Trägers eines Innenverkleidungsteils sein. Das Trägerbauteil kann lackiert oder beschichtet werden und so partiell lichtundurchlässig sein, wobei die Teile, in denen eine Beleuchtung gewünscht wird, unlackiert oder unbeschichtet bleiben.

Es ist auch möglich, den Träger in dem Bereich, in dem die Beleuchtung erfolgen soll, also zum Beispiel im Bereich der Ablagefläche 10, mit einem Ausschnitt zu versehen, beispielsweise durch Stanzen, Fräsen, Laserscheiden oder Wasserstrahlschneiden, und diesen Ausschnitt zu ersetzen durch einen getrennten transluzenten Einsatz, der das transluzente Trägerbauteil bildet. In diesem Fall kann der Träger auch aus nichttransparentem Material, zum Beispiel einem Fasermattenmaterial hergestellt sein. Der transluzente Einsatz kann beispielsweise ein durch Spritzgießen oder Pressformen hergestelltes Teil aus PP, ABS, PC-ABS oder PMMA (Polymethylmethacrylat) oder Mischungen hiervon sein.

Der separate transluzente Einsatz kann eine hinterspritzte TPO (thermoplastisches Olefin)-, TPU (thermoplastisches Polyurethan)-, PU (Polyurethan)- oder PVC-Folie aufweisen, beispielsweise eine unter der Bezeichnung Smartfoil^{™} bekannte Folie. Der transluzente Einsatz kann auch zusätzliche optische Eigenschaften aufweisen, die zum Beispiel bei Spritzgussformen hergestellt werden, beispielsweise durch Verwendung eines optische verbesserten Polymers oder durch integrierte Optikelemente, wie Linsen, Reflektoren und dergleichen. Optisch wirksame Elemente können aber auch in einem weiteren Verarbeitungsschritt in das Trägermaterial oder Deckmaterial eingebracht werden, beispielsweise durch Ätzen oder Siebdrucken. Beispiele für Materialien zur Herstellung des Einsatzes sind PMMA und PC-Materialien für Lichtleiter, Z. B. ACRYLITE^{™} LED 8N LD96 von Evonik Cyro LLC, NJ, USA. Dabei handelt es sich um eine Formmasse mit niedrigem Brechungsindex und hoher spektraler Lichtdurchlässigkeit für senkrecht einfallendes, sichtbares Licht, von konstant ungefähr 92%.

Der separate transluzente Einsatz kann an dem Träger auf verschiedene Arten befestigt werden, beispielsweise durch Clips, Klemmen, Stifte, Rasthaken, Wärmeverstemmen, Ultraschallschweißen, Kleben, beispielsweise Heißkleben, und so weiter. Des Weiteren kann das Trägerbauteil auch in der Ausgestaltung ohne Einsatz angeformter Befestigungselemente, wie Clips, Stifte, Rasthaken, Ösen und dergleichen zum Anbringen des transluzenten Deckmaterials aufweisen.

Das Trägerbauteil oder der Einsatz können eine Schnittstelle für die Lichtquelle aufweisen, zum Beispiel einen Anschluss für Lichtleiter einzelner LED-Module oder anderer Lichtquellen oder Einrichtungen zum Anbringen und Anschließen der Lichtquelle. In manchen Ausgestaltungen können die Lichtquelle oder Teile der Lichtquelle an dem Trägerbauteil oder dem Einsatz lösbar befestigt werden, z. B. durch Clips oder Rasteinrichtungen.

In einigen Ausgestaltungen sind auf dem Trägerbauteil oder dem Einsatz graphische Gestaltungen vorgesehen, und zwar auf der dem Deckmaterial zugewandten Seite und/oder auf der von ihm abgewandten Seite. Diese graphischen Gestaltungen können zum Beispiel durch Tintenstrahldrucken, Siebdrucken, Laserdrucken, Laserätzen oder dergleichen aufgebracht werden.

Das transluzente Deckmaterial 18 ist, wie unten noch näher erläutert wird, in Form einer Matte auf das Trägerbauteil lose aufgelegt oder lösbar mit diesem verbunden. In einigen Ausgestaltungen ist das transluzente Deckmaterial eine weiche Matte, zum Beispiel aus TPO, TPU, PO (Polyolefin) und PVC als Hauptbestandteil. Das transluzente Deckmaterial kann auf verschiedene Arten hergestellt werden, beispielsweise durch Spritzgießen oder Sintern, durch Vakuumformen, durch Gießen oder Rotationsformen und andere bekannte Verfahren. Das Deckmaterial kann genarbt oder glatt sein. Es kann während des Formungsprozesses oder danach mit einer Narbe versehen werden.

Das transluzente Deckmaterial kann mit einem transluzenten Rückenmaterial laminiert werden, beispielsweise mit einem Polyolefinschaum, einem Abstandsgewebe, einem transluzenten Vlies-Material oder einem transluzenten Gewirke. Die Oberfläche des transluzenten Deckmaterials kann auf verschiedene Weise gestaltet und strukturiert werden, beispielsweise mit einer Narbung versehen werden. Bekannte Technologien der Anmelderin, die eingesetzt werden können, sind unter den Begriffen Smartfoil^{™} und Fastcast^{™} bekannt. Dabei sollten die verschiedenen Materialien des transluzenten Deckmaterials, und gegebenenfalls einer Rückenschicht, sowie des transluzenten Trägers sorgfältig aufeinander abgestimmt werden, um eine ausreichende Lichtdurchlässigkeit und homogene Verteilung über der Oberfläche des Innenverkleidungsteils zu erreichen. Die Materialien sollten möglichst auch UV- und wärmebeständig sein.

Das transluzente Deckmaterial kann direkt mit einer Graphik, einem Bild, einem Muster oder dergleichen gestaltet werden, indem diese auf die A-Seite, die B-Seite oder beide Seiten des Deckmaterials aufgedruckt werden. Zwei beispielhafte Alternativen sind das Tintenstrahldrucken und das Siebdrucken zum Aufbringen der Graphik, des Bildes, des Musters oder dergleichen. Beispielsweise können dekorative Muster, Marken oder Namen des Kraftfahrzeuges, Logos, Embleme, aber auch jegliche andere graphische Gestaltung und Bilder aufgebracht werden. Es ist auch möglich, die aufgedruckte Graphik abzustimmen mit einer Strukturierung der Oberfläche des Deckmaterials, um beispielsweise eine dreidimensionale Struktur zu verstärken oder zu simulieren, beispielsweise eine Holz- oder Baumrindenstruktur. Durch Bedrucken des Deckmaterials in verschiedenen Ebenen und Überlagerung der verschiedenen Strukturen kann ein dreidimensionaler oder Moire-Effekt erzielt werden.

In einigen Ausgestaltungen hat das transluzente Deckmaterial eine weiche Haptik, beispielsweise eine Shore A Härte im Bereich von 60 bis 80, beispielsweise von ungefähr 70. Die Shore-Härte ist ein Werkstoffkennwert für Elastomere und Kunststoffe, der in den Normen DIN ISO 868 und DIN ISO 7619-1 festgelegt ist. Der Shore-Härte-Prüfung misst die Eindringtiefe eines federbelasteten Stiftes aus gehärtetem Stahl in ein zu prüfendes Material und leitet von der Eindringtiefe die Shore-Härte ab (zum Beispiel o Shore bei 2,5 mm Eindringtiefe und 100 Shore bei 0 mm Eindringtiefe). Eine hohe Shore-Härte bedeutet somit eine große Härte. Bei Shore-A wird die zu messende Probe beispielsweise mit einer Kraft von 12,5 Newton beaufschlagt. Die Messung findet bei einer Umgebungstemperatur von etwa 23°C statt, die Materialdicke sollte mindestens 6 mm betragen. Ein Prüfstift kann die Stirnfläche eines Kegelstumpfs mit einem Durchmesser von 0,79 mm und einem Öffnungswinkel von 35° haben. Das Auflagegewicht beträgt 1 kg, und die Haltezeit etwa 15 s. Andere Prüfmethoden können eingesetzt werden, wie die Skleroskop-Härteprüfung (ein dynamischer Test, bei dem die Härte über die Rückprallhöhe eines Hammers bestimmt wird) oder ein Durometer.

Durch eine Shore-Härte im Bereich von 60 bis 80, beispielsweise von ungefähr 70, wird eine weiche Haptik des transluzenten Deckmaterials erreicht, wodurch verhindert werden kann, dass auf dem Deckmaterial abgelegte Gegenstände klappern, vibrieren, verrutschen und dergleichen. Dieser Effekt kann durch eine Strukturierung und/oder Narbung der Oberfläche des Deckmaterials noch verbessert werden.

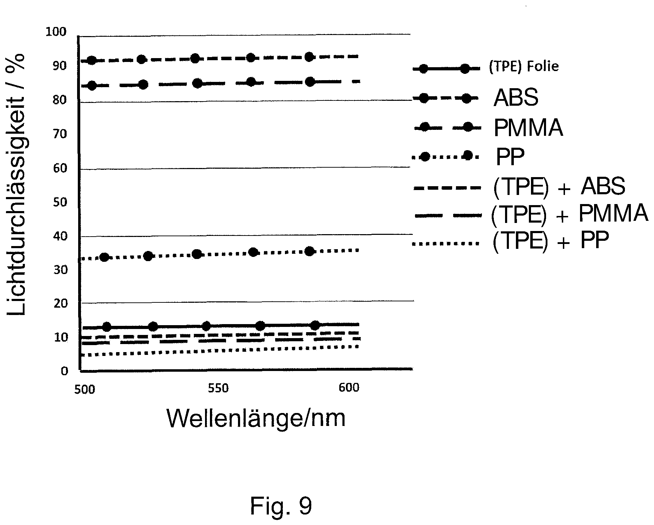

Der Transmissionsgrad oder die Lichtdurchlässigkeit des Trägers, des Deckmaterials und gegebenenfalls weitere Zwischenschichten und/oder Klebschichten, kann individuell für alle Einzelbestandteile und für das zusammengesetzte Innenverkleidungsteil insgesamt und für Unterkombinationen bestimmt werden. Letztendlich wird die Lichtdurchlässigkeit des Innenverkleidungsteils durch den Verbund der Materialien bestimmt, wobei die Lichtdurchlässigkeit des Trägerbauteils deutlich höher sein kann als die des Deckmaterials, beispielsweise um einen Faktor 10 oder mehr höher. Erfindungsgemäß liegt die Lichtdurchlässigkeit des Verbundes aus Trägerbauteil und transluzentem Deckmaterial für sichtbares Licht im Bereich von z.B. 5% bis 10%. Fig. 9 zeigt verschiedene Lichtdurchlässigkeiten für unterschiedliche Materialkombinationen von Trägerbauteil und Deckmaterial bei unterschiedlichen Wellenlängen.

Die Lichtdurchlässigkeit kann beispielsweise bestimmt werden durch Infrarot-Spektroskopie, wobei Infrarot-Strahlung durch die Materialprobe hindurchgeht. Das resultierende Spektrum stellt die molekulare Absorption und die Transmission dar, und bildet so einen "molekularen Fingerabdruck" der Probe. Je höher die Lichtdurchlässigkeit ist, desto höher ist der Transmissionsgrad des Materials. Die genauen Werte des Transmissionsgrades des Innenverkleidungsteils sind abhängig von den gewählten Materialien und Schichtdicken, aber auch von der für die Lichtquelle verwendeten Technologie, der Lumineszenz und anderen Spezifikationen der Lichtquelle.

Als Lichtquelle können eine große Anzahl unterschiedlicher Technologien eingesetzt werden, diese können, ohne Einschränkung hierauf, folgende Technologien umfassen:

Lichtleiterplatten aus PMMA oder anderen optisch wirksamen Polymeren, die mit einer oder mehreren LEDs gekoppelt werden, gegebenenfalls mit Kanteneinstrahlung; polyoptische Fasern, zum Beispiel aus PMMA oder Glas, die gewebt, gestrickt, gewirkt oder auf andere Weise flächig verarbeitet sind, um eine flexible formbare Rückbeleuchtung zu bilden, die dann mit einer oder mehreren LEDs gekoppelt wird; eine Hintergrundbeleuchtung mit integrierten optischen Strukturen, die zum Beispiel eingeformt, durch Laserdrucken hergestellt sind, und gegebenenfalls mit einem Reflektor, die mit einem oder mehreren LEDs gekoppelt sein können; OLEDs, d.h. organische LEDs; elektrolumineszierende Komponenten, wie Folien und Platten.

In einer oder mehreren Ausgestaltungen ist es auch möglich, als Lichtquelle sogenannten Micro-, Nano- oder Pico-Projektoren zu verwenden. Solche Micro-, Nano- oder Pico-Projektoren sind bekannt und verwenden Projektionssysteme auf der Basis von z. B. Laser-LEDs oder RGB-LEDs. Die Systeme können dazu verwendet werden, statische oder dynamische Bilder auf die Rückseite des transluzenten Trägerbauteils zu projizieren. Grundsätzlich können sämtliche Arten von Bildern, Mustern, Strukturen und Filmen projiziert werden, einschließlich personalisierter statischer oder bewegter Bilder, bewegte Muster, Filme, Navigationsinformation, Information bezüglich des Fahrzeugzustands, Funktionshinweise und vieles andere mehr.

Die Ansteuerung der Rückprojektionssysteme kann über einen von dem Fahrzeug getrennten Rechner erfolgen, beispielsweise über ein Smartphone, eine Smart-Watch, Smartglasses, ein Tabletts oder einen tragbaren Computer. Ein bekanntes System ist der Pico-Projektor von Micron Technologies, dessen Größe lediglich etwa 9 mm × 5 mm × 5 mm beträgt und der lediglich etwa 1,5 g schwer ist. Dieses System kann auch mit der Bordelektronik des Fahrzeugs gekoppelt werden, oder es kann direkt oder indirekt mit intelligenten Steuergeräten, die von dem Fahrzeug unabhängig sind, gekoppelt werden. Die Steuergeräte senden Bilder und/oder Daten in Form elektronischer Signale zur Ansteuerung der Laser- oder LED-Lichtquelle.

Im Folgenden sind verschiedene Ausgestaltungen der Erfindung beschrieben, wobei die oben beschriebenen und weitere Merkmale zum Einsatz kommen können. Das Innenverkleidungsteil kann als eine Ablagefläche eines Ablagefachs oder Staufachs eines Kraftfahrzeugs verwendet werden, beispielsweise auf der Mittelkonsole eines Kraftfahrzeugs, in einem Getränkehalter, in einem Ablagefach der Türverkleidung, in einem Handschuhfach, etc.. Es kann aber auch verwendet werden im Zusammenhang mit anderen Innenverkleidungsteilen, beispielsweise die Innenverkleidung der Türen, einschließlich Ablagefächer in den Türen, Einsätze, Armauflagen, aber auf die Innenverkleidung von Säulen, Seitenwänden, Dachhimmel und ähnliche Komponenten, einschließlich Bodensysteme, wie Ladeböden, hintere Ablageflächen, Handschuhfächer, Ablageflächen in und auf der Instrumententafel. Die Beleuchtung hilft bei der Orientierung und dem Ablegen und Auffinden von Gegenständen auf der Ablagefläche und wird in der Regel dort vorgesehen, wo sie für den Passagier und Fahrer des Kraftfahrzeugs einsehbar ist. Zusätzlich kann die Beleuchtung der Orientierung dienen und dekorative Zwecke erfüllen.

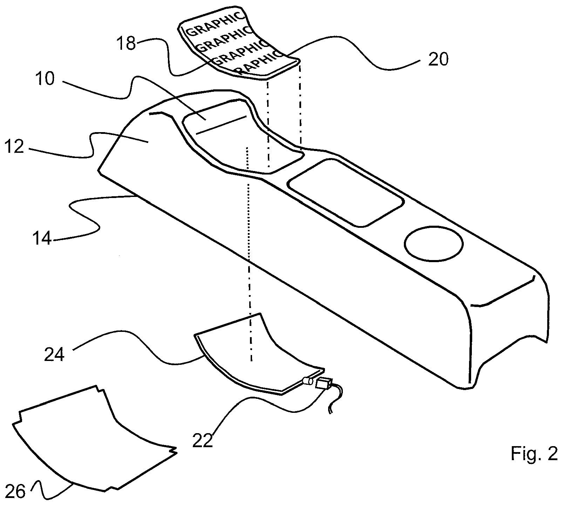

Fig. 2 ein Beispiel der Mittelkonsole der Fig. 1a und 1b in auseinandergezogener Darstellung. Die Mittelkonsole 12 umfasst das Trägerbauteil 14, das zum Beispiel aus einem transparenten oder semitransparenten ABS, PP oder einem anderem Kunststoffmaterial hergestellt ist. Das Trägerbauteil 14 kann überall außer im Bereich der Ablagefläche 10 mit einer Farbe oder Folie beschichtet und somit außerhalb der Ablagefläche 10 lichtundurchlässig (opak) sein. Im Bereich der Ablagefläche 10 ist ein transluzentes Deckmaterial 18 auf die Ablagefläche 10 aufgebracht, das zum Beispiel aus TPO, TPE, PO oder anderen Materialien hergestellt sein kann. Das Deckmaterial 18 kann mit einer Graphik 20 versehen sein, die beispielsweise durch digitales Tintenstrahldrucken, Siebdrucken, Laserdrucken oder anderes Farbbeschichten aufgebracht sein kann.

Auf der Rückseite des Trägerbauteils 14 ist ein LED-Modul 22 angeordnet und mit einer Hintergrundbeleuchtungseinrichtung 24 gekoppelt. Das LED-Modul 22 und die Hintergrundbeleuchtungseinrichtung 24 bilden gemeinsam die Lichtquelle. Die Hintergrundbeleuchtungseinrichtung 24 kann beispielsweise durch eine Textilschicht aus PMMA, eine Lichtleiterplatte oder Lichtleiterfolie, oder eine Lichtbox realisiert sein.

In der Ausgestaltung der Fig. 2 ist die Lichtquelle auf ihrer Rückseite, d.h. auf der vom Trägerbauteil 14 abgewandten Seite, durch eine Lichtabschlusseinrichtung 26 abgedeckt, beispielsweise durch einen lichtundurchlässigen Träger, eine lichtundurchlässige Platte, Folie oder dergleichen, die verhindert, dass das von der Lichtquelle abgegebene Licht an der Rückseite des Trägerbauteils austritt.

Das Deckmaterial 18 kann durch mechanische Befestigungsmittel mit dem Trägerbauteil 14 verbunden werden, beispielsweise durch separate oder angeformte Befestigungsbauteile, wie Clips, Rasthaken, Stifte, Ösen und dergleichen. Es ist auch möglich, dass das Deckmaterial 18 lose auf das Trägerbauteil 14 aufgelegt wird und darauf lediglich durch Schwerkraft und Reibkraft haftet oder formschlüssig mit einer Halterung aufgenommen wird oder Kombinationen hiervon. Auch die Verbindung mit Klettverschlüssen oder anderen leicht haftenden Materialien ist denkbar. Beispielsweise kann eine zweiseitig haftende Klebefolie mit unterschiedlichen Hafteigenschaften vorgesehen werden, die mit Ihrer einen Seite mit dem Deckmaterial 18 fest oder lösbar verbunden ist und mit ihrer anderen Seite an das Trägerbauteil fest oder lösbar angeklebt werden kann, wobei wenigstens eine der Verbindungen lösbar ist. Es ist möglich, die Klebefolie vorab an das Deckmaterial anzubringen und mit einer Abdeckfolie zu versehen, die entfernt wird, um das Deckmaterial dann auch an dem Trägerbauteil anzubringen. Die Klebkraft kann unterschiedlich eingestellt sein, einschließlich einer Heftwirkung, wobei das Deckmaterial ähnlich einem Klebezettel oder einer Haftnotiz, auch als Post-It bekannt, an das Trägerbauteil angeheftet wird.

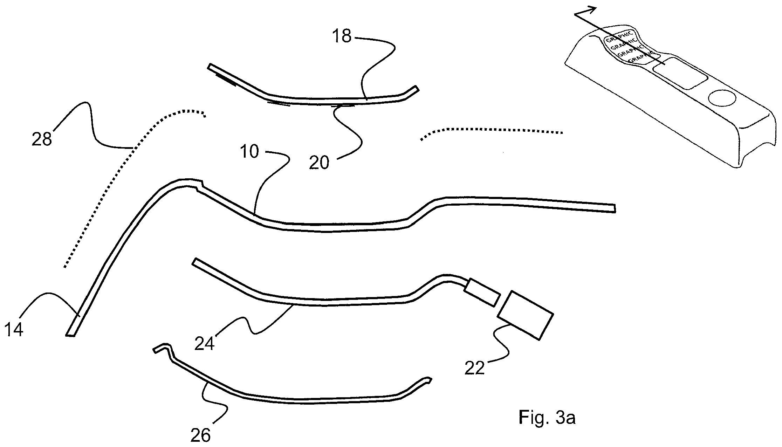

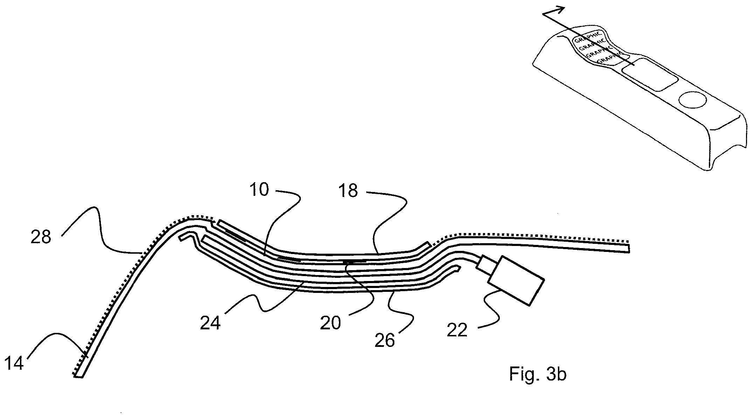

Das Ausführungsbeispiel der Fig. 2 ist in den Fig. 3a und 3b nochmals in Schnittdarstellung in auseinandergezogener und in zusammengesetzter Form dargestellt. Es werden dieselben Bezugszeichen verwendet. Auf die Beschreibung der Fig. 2 wird Bezug genommen. In den Fig. 3a und 3b ist zusätzlich die opake Beschichtung 28 des Trägerbauteils visualisiert, die beispielsweise in Form von Farbe oder Folie aufgebracht sein kann.

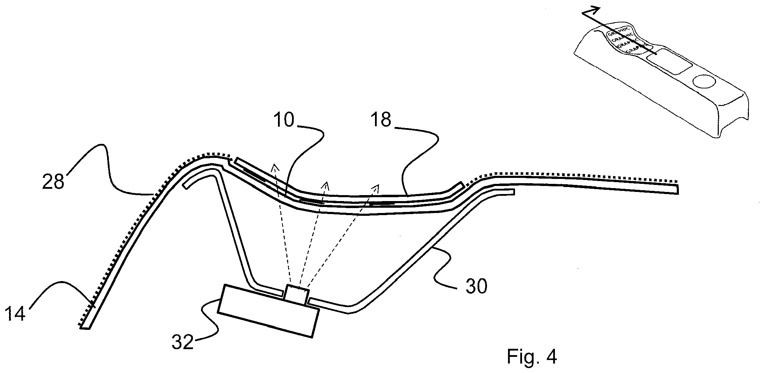

Fig. 4 zeigt eine alternative Ausgestaltung des Innenverkleidungsteils. In Übereinstimmung mit den vorhergehenden Ausgestaltungen umfasst das Innenverkleidungsteil ein Trägerbauteil 14, das mit Farbe oder Folie 28 beschichtet ist, wobei die Beschichtung nur außerhalb der Ablagefläche 10 aufgebracht ist. Im Bereich der Ablagefläche 10 liegt das Deckmaterial 18, wobei das Trägerbauteil 14 im Bereich der Ablagefläche 10 und das Deckmaterial transluzent sind, wie oben beschrieben, und wobei das Deckmaterial 18 eine weiche Oberfläche aufweist, wie ebenfalls oben beschrieben.

Das Innenverkleidungsteil der Fig. 4 umfasst als Lichtquelle ein Rückprojektionssystem bestehend aus einer Lightbox 30 oder "Closeout" und einem Mikro-, Nano- oder Pico-Projektor 32. Die Lightbox oder Closeout 30 ist im Wesentlichen eine Halterung für den Projektor 32. Mikro-, Nano- und Pico-Projektoren sind Miniaturprojektoren der oben beschriebenen Art, die je nach Hersteller unterschiedlich bezeichnet werden. Die üblichste Bezeichnung für solche kleinen tragbaren Projektorsysteme ist heute Pico-Projektor, während die Bezeichnung Micro-Projektor häufig für integrierte oder eingebettete Projektorsysteme verwendet wird, die man beispielsweise in Smartphones oder ähnlichen Geräten findet. Eine verbindliche eindeutige Bezeichnung gibt es bisher heute nicht.

Solche Mikro-, Nano- oder Pico-Rückprojektionssysteme 32 können dazu verwendet werden, eine statische oder dynamische Hintergrundbeleuchtung der Ablagefläche 10 bereitzustellen, einschließlich statischer und dynamischer Bilder, Muster, Graphiken, und personalisierte Darstellungen, wie oben erläutert.

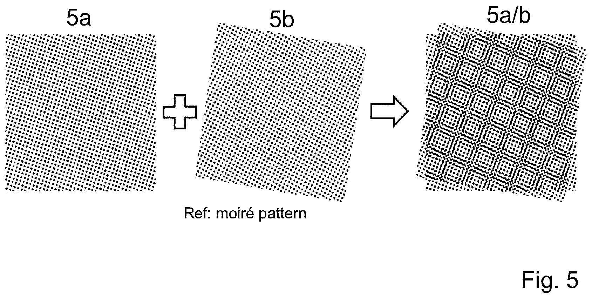

Wie oben erläutert, kann das Deckmaterial 18, sei es in Verbindung mit einer statischen Lichtquelle oder einem Rückprojektionssystem, selbst ebenfalls gestaltet sein, wobei Graphik und Bilder oder auch geographische Muster in einer oder mehreren Schichten auf der A- und/oder der B-Seite des Deckmaterials aufgedruckt sein können. Fig. 5 zeigt das Beispiel der Erzeugung eines dreidimensionalen oder Moire-Effektes durch Aufdrucken von zwei zueinander versetzten geometrischen Mustern in verschiedenen Ebenen des Deckmaterials, beispielsweise auf dessen Vorderseite und seiner Rückseite. Die Graphik 5a/b zeigt die Überlagerung der beiden Graphiken 5a und 5b.

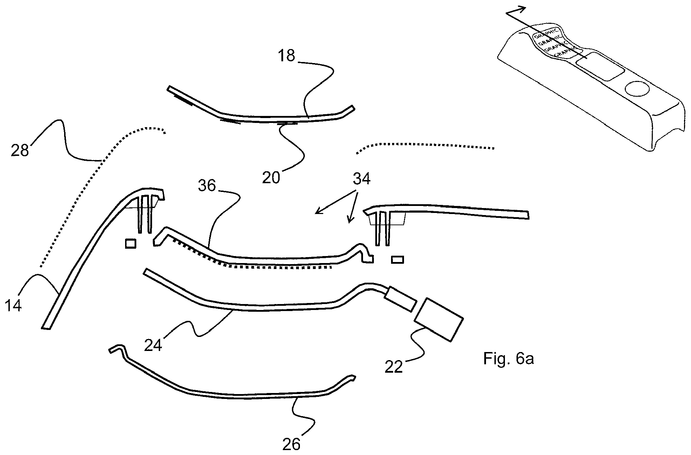

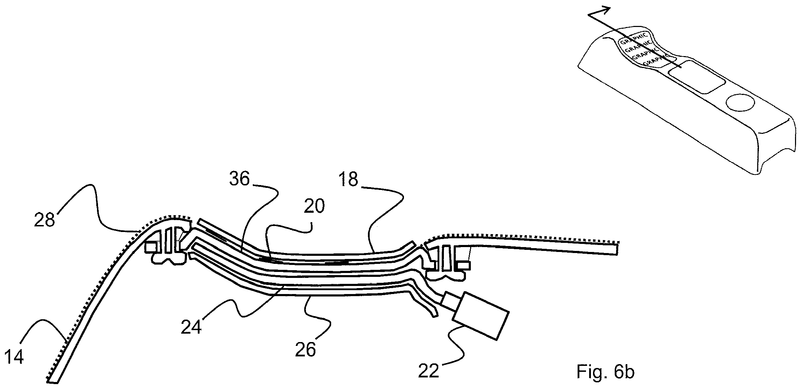

Die Fig. 6a und 6b zeigen ein weiteres Beispiel einer Ausgestaltung eines Innenverkleidungsteils gemäß der Erfindung, wobei Fig. 6a das Innenverkleidungsteil in auseinandergezogener Form und Fig. 6b das Innenverkleidungsteil in zusammengesetzter Form zeigt.

In der Ausgestaltung der Fig. 6a und 6b weist der Träger 14 einen Ausschnitt 34 im Bereich der transluzenten Ablagefläche auf. Der Träger 14 selbst kann aus einem lichtundurchlässigen Material, wie gefärbtes ABS, PP oder auch ein Fasermaterial sein, und/oder er kann mit einer lichtdurchlässigen Farbe oder Folie 28 beschichtet sein. In dem Ausschnitt 34 ist ein transluzenter Einsatz 36 eingefügt, der beispielsweise durch Spritzgießen oder Spritzpressen aus Kunststoff hergestellt ist und mit dem Träger 14 fest verbunden wird. Der Einsatz 36 bildet in dem fertigen Verkleidungsteil die Auflagefläche und das transluzente Trägerbauteil. Er kann auf seiner Rückseite und/oder auf seiner Vorderseite strukturiert, mit einer Graphik und/oder mit optischen Elementen versehen sein, wie durch die gestrichelte Linie angedeutet ist. In dem gezeigten Ausführungsbeispiel wird der Einsatz 36 mit dem Träger 14 durch Heißverstemmen verbunden, wobei in diesem Beispiel der Träger 14 um den Umfang des Ausschnittes 34 verteilte Verbindungsstifte oder -stege 38 aufweist, die in entsprechende Ausnehmungen 40 in dem Einsatz 36 eingreifen und durch Heißverstemmen verformt werden, wie in Fig. 6b gezeigt. Dadurch wird eine formschlüssige und kraftschlüssige und darüber hinaus teilweise stoffschlüssige Verbindung zwischen dem Einsatz 36 und dem Träger 14 geschaffen.

Es können auch andere Verbindungsarten vorgesehen werden, einschließlich lösbare Verbindungen mittels Clips, Stiften, Rasthaken, Ösen und dergleichen, oder nichtlösbare Verbindungen durch Schweißen, Kleben, Nieten und andere geeignete Verbindungsmethoden.

Im Bereich der Auflagefläche, die durch den Einsatz 36 definiert wird, wird ein transluzentes Deckmaterial 18 aufgebracht, das optional mit einer Graphik 20 auf seiner A- und/oder B-Seite versehen sein kann. Das transluzente Deckmaterial 18 liegt im Bereich der Auflagefläche auf dem Einsatz 36 lose auf oder ist lösbar mit diesem verbunden werden.

Auf der Rückseite des Trägerbauteils sind, wie in der Ausgestaltung der Fig. 3a und 3b ein LED-Modul 22, eine Hintergrundbeleuchtungseinrichtung 24 und eine Lichtabschlusseinrichtung 26 angeordnet. Diese dienen nur als ein Beispiel für eine Lichtquelle des erfindungsgemäßen Innenverkleidungsteils, und andere Lichtquellen und Beleuchtungseinrichtungen können eingesetzt werden, einschließlich aller der oben genannten Beispiele und des in Fig. 4 gezeigten Rückprojektionssystems.

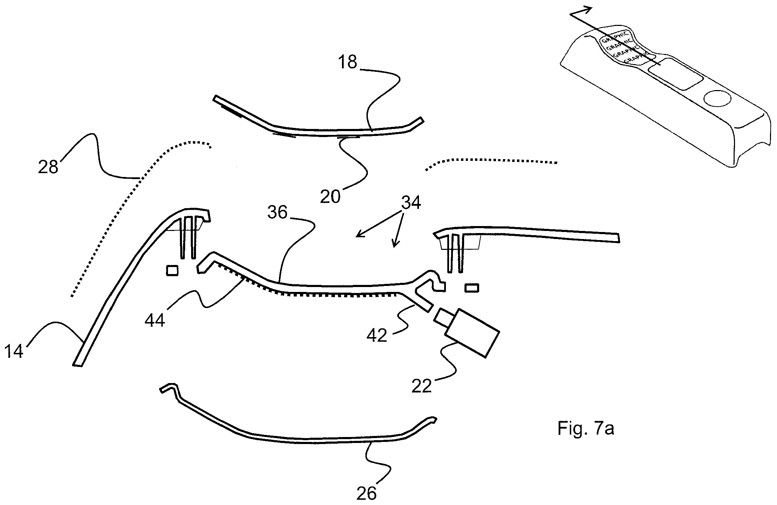

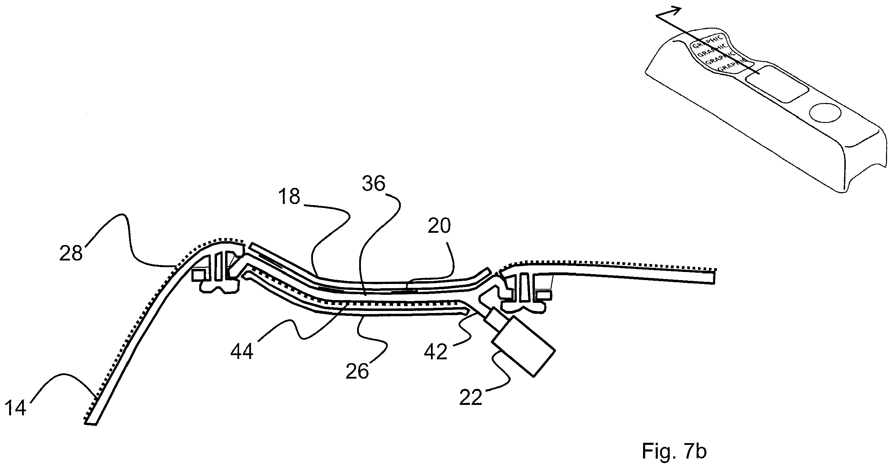

Ein weiteres Beispiel eines nicht erfindungsgemäßen Innenverkleidungsteils ist in den Fig. 7a und 7b dargestellt. Diese Ausgestaltung unterscheidet sich von der der Fig. 6a und 6b dadurch, dass der Einsatz 36 ein Beleuchtungsmodul bildet, wobei das LED-Modul 22 direkt über einen Lichtleiter 42 an den als Beleuchtungsmodul dienenden Einsatz 36 angeschlossen wird. Hierzu kann der Einsatz 36 aus einem Licht leitenden Material, wie PMMA oder PC, z.B. Polymere von Evonik, wie das PMMA ACRYLITE^{™} LED 8N LD96, hergestellt werden. Zusätzlich können auf der Rückseite des Einsatzes 36 optische Elemente 44 angeformt oder durch sekundäre Bearbeitung, wie Laserbearbeitung oder Drucken, ausgebildet sein. Diese optischen Elemente können beispielsweise eine Facettierung, Reflektorelemente oder andere Elemente zur Ausrichtung und/oder Verstärkung des Lichtes umfassen.

Im Übrigen wird auf die Beschreibung der in Fig. 6a und 6b sowie die oben genannten Beispiele zur Ausgestaltung der verschiedenen Komponenten des Innenverkleidungsteils Bezug genommen.

In den Ausgestaltungen, die in den Fig. 2 bis 7 dargestellt sind, können die einzelnen Komponenten aus einem der oben erörterten Materialien bestehen und die oben erörterten Eigenschaften hinsichtlich ihrer Transluzenz, Festigkeit, Haptik und zusätzliche Strukturierung, Bedruckung und dergleichen haben. In einigen Ausgestaltungen ist das Trägerbauteil 14 aus einem transluzenten ABS, PP, PP-ABS oder einem anderem geeigneten transluzenten Material durch Spritzgießen, Pressformen, Vakuumformen, Blasformen oder einem anderen geeigneten Prozess hergestellt. Wenn ein Träger mit einem Ausschnitt verwendet wird, in den ein transluzenter Einsatz eingesetzt wird, können auch opake Materialien, beispielsweise auf der Grundlage von Fasermatten für den Träger verwendet werden.

Das Deckmaterial kann beispielsweise aus transluzentem TPO, TPE, TPU, PO, oder PVC bestehen, wobei Graphik zum Beispiel durch digitales Drucken beispielsweise Tintenstrahldrucken, Siebdrucken oder Laserdrucken aufgebracht oder durch Farbauftrag über eine Maske erfolgen kann. Zusätzlich kann das Deckmaterial auf seiner Oberseite und/oder seiner Unterseite strukturiert sein, wobei die Struktur bei der Formung des Deckmaterials mit eingebracht oder durch nachträgliche Bearbeitung, beispielsweise mittels Lasern oder Ätzen, erzeugt werden kann.

Das Trägerbauteil 114 kann zusätzlich mit einer Beschichtung 28 versehen sein, beispielsweise kann es lackiert oder mit einer Folie beschichtet sein. Es ist auch möglich, das Trägerbauteil 14 selbst einzufärben.

Trägerbauteil und Deckmaterial können lösbar miteinander verbunden sein, wobei es auch möglich ist, das Deckmaterial in Form einer Matte lose auf das Trägerbauteil aufzulegen.

Als Lichtquelle kann eine Kombination aus einem LED-Modul oder einem anderen Leuchtmittel und einer Hintergrundbeleuchtungseinrichtung dienen, wobei die Hintergrundbeleuchtungseinrichtung eine Platte, Folie, ein Textil oder eine nichtgewebte Struktur mit Lichtleiteigenschaften umfassen kann, beispielsweise aus PMMA. Alternativ ist auch die Verwendung eines Rückprojektionssytems mit einer Lightbox und einem Mikro- bis Pico-Projektor einsetzbar.

Auf der Rückseite, also der vom Trägerbauteil abgewandten Seite der Lichtquelle kann eine Lichtabschlusseinrichtung vorgesehen sein, die das Austreten von Licht auf der Rückseite des Trägerbauteils verhindert.

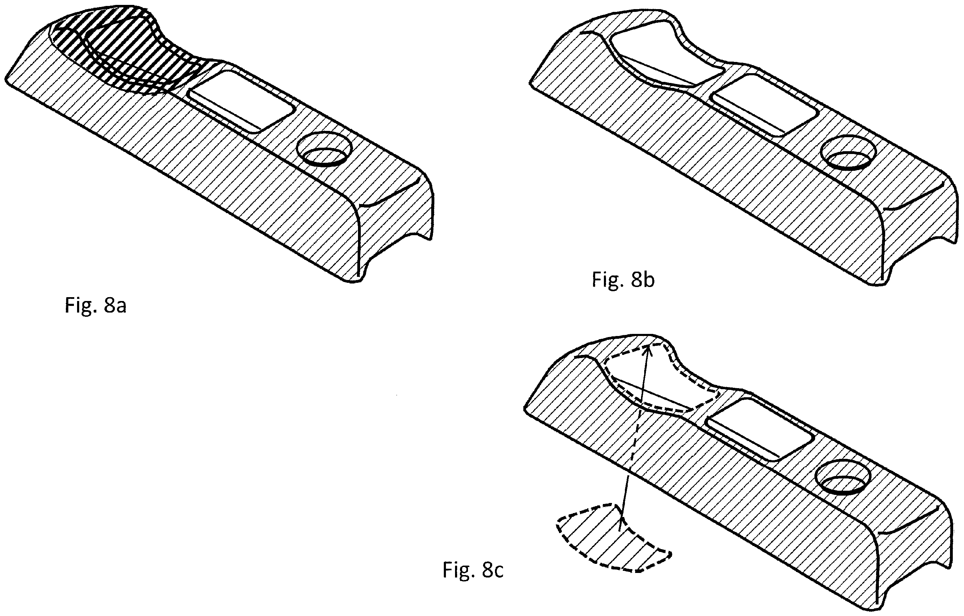

Die Fig. 8a, 8b und 8c zeigen nochmals schematisch in perspektivischer Darstellung verschiedene Varianten des erfindungsgemäßen Innenverkleidungsteils anhand des Beispiels einer Mittelkonsole.

In Fig. 8a ist die Oberfläche des Trägerbauteils partiell/lokal mit transluzentem Deckmaterial abgedeckt, um die Ablagefläche zu bilden.

In Fig. 8b ist das gesamte Innenverkleidungsteil mit einem Deckmaterial versehen

In Fig. 8c weist das Innenverkleidungsteil eine Ausnehmung auf, in die ein transluzenter Einsatz eingebracht ist.

Fig. 9 zeigt beispielhaft in Form eines Diagramms die Lichtdurchlässigkeit verschiedener Materialien und Materialkomponenten abhängig von der Wellenlänge des Lichtes zur Erleichterung des Verständnisses der Erfindung. Es ist erkennbar, dass im sichtbaren Wellenlängenbereich, hier beispielsweise gezeigt anhand des Bereiches von 400 nm bis 600 nm, ein Verbund aus einem Träger und einem transluzenten Deckmaterial eine Lichtdurchlässigkeit T (Transmissionsgrad) im Bereich von etwa 1 bis 20% oder spezieller 5 bis 15% oder 5% bis 10% liegt, bzw. kleiner als 15% hat. Die Lichtdurchlässigkeit des Innenverkleidungsteils kann eingestellt werden durch die Wahl von Material und Dicke des Trägers oder des Einsatzes und des Deckmaterials und gegebenenfalls weiterer Materialschichten und Klebeschichten sowie durch Oberflächenbearbeitung und -gestaltung des einzelner Schichten des Innenverkleidungsteils.

In der Grafik der Fig. 9 werden die Transmissionskurven von ABS, PMMA und PP, die als Material für das Trägerbauteil oder den Einsatz verwendet werden können, TPE, das als Deckmaterial verwendet werden kann, und verschiedener Materialkombination für das Trägerbauteil und das Deckmaterial gewählt, nämlich: ABS + TPE, PMMA + TPE; und PP + TPE.

In dem gezeigten Beispiel ergibt sich für das Material des Trägerbauteils oder Einsatzes, eine Lichtdurchlässigkeit von etwa 80% bis 95% (für ABS und PMMA) bzw. von etwa 30% bis 40% (für PP). Für das Deckmaterial (TPE) ergibt sich eine Lichtdurchlässigkeit von etwa 10 bis 15%, insbesondere von etwa 12%. Und für den Verbund aus Träger oder Einsatz und Deckmaterial ergibt sich eine Lichtdurchlässigkeit von ungefähr 5% bis 10%.

All diese Werte dienen nur als Beispiel zur Erläuterung der Erfindung.

## Patentansprüche

1. Innenverkleidungsteil für ein Kraftfahrzeug, welches umfasst:
ein transluzentes Trägerbauteil (14) mit einer Vorderseite und einer Rückseite, eine aus einem transluzenten Deckmaterial gebildete transluzente Deckschicht (18) auf der Vorderseite des Trägerbauteils (14) und
eine Lichtquelle auf der Rückseite des Trägerbauteils (14),
wobei der Verbund aus dem Trägerbauteil (14) und der transluzenten Deckschicht (18) eine Lichtdurchlässigkeit von 5% bis 10% im sichtbaren Wellenlängenbereich hat, und
**dadurch gekennzeichnet, dass**
die Deckschicht (18) in Form einer Matte auf das Trägerbauteil (14) lose aufgelegt oder mit dem Trägerbauteil (14) lösbar verbunden ist.

2. Innenverkleidungsteil nach Anspruch 1, wobei das transluzente Deckmaterial eine Shore A Härte im Bereich von 60 bis 80 oder von ungefähr 70 hat.

3. Innenverkleidungsteil nach Anspruch 1 oder 2, wobei die Lichtquelle ein Rückprojektionssystem (24) umfasst, das über eine elektronische Steuereinrichtung ansteuerbar ist.

4. Innenverkleidungsteil nach Anspruch 3, wobei das Rückprojektionssystem durch die Steuereinrichtung ansteuerbar ist, um verschiedene statische oder/oder bewegte Bilder anzuzeigen.

5. Innenverkleidungsteil nach Anspruch 3 oder 4, wobei die Steuereinrichtung ein von dem Kraftfahrzeug getrenntes Rechensystem ist, wie ein Smartphone, eine Smart-Watch, einen Tablet-Computer oder eine andere tragbare Recheneinrichtung.

6. Innenverkleidungsteil nach einem der Ansprüche 1 und 2, wobei die Lichtquelle eine Lichtleiterplatte oder Lichtleiterfaser, eine Licht leitenden Folie, ein polyoptisches Textil oder Vlies, einen angeformten Lichtleiter, einen Reflektor, eine LED-Lichtquelle, wie eine LED-Folie, eine Laserlichtquelle, eine Elektrolumineszenzkomponente, eine Lichtbox oder eine Kombination hiervon umfasst.

7. Innenverkleidungsteil nach einem der vorangehenden Ansprüche, wobei das Innenverkleidungsteil eine Ablagefach oder Staufach des Kraftfahrzeugs umfasst und die Lichtquelle einen für Passagiere des Kraftfahrzeuges sichtbaren Teil des Ablagefachs oder Staufachs beleuchtet.

8. Innenverkleidungsteil nach einem der vorangehenden Ansprüche, wobei das transluzente Deckmaterial eine Lichtdurchlässigkeit von etwa 12% im sichtbaren Wellenlängenbereich hat.

9. Innenverkleidungsteil nach einem der vorangehenden Ansprüche, wobei die Lichtdurchlässigkeit des Trägerbauteils (14) um eine Faktor 10 oder mehr höher ist als die Lichtdurchlässigkeit des Deckmaterials.

10. Innenverkleidungsteil nach einem der vorangehenden Ansprüche, wobei die Deckschicht (18) auf ihrer von dem Trägerbauteil (14) abgewandten Oberfläche und/oder auf ihrer dem Trägerbauteil (14) zugewandten Oberfläche mit einer Graphik, einem Bild, einem Muster, einer Struktur oder Kombinationen hiervon versehen, insbesondere bedruckt ist, insbesondere um einen 3D- oder Moire-Effekt zu erzeugen.

11. Innenverkleidungsteil nach einem der vorangehenden Ansprüche, wobei das transluzente Trägerbauteil (14) durch einen Abschnitt eines Trägers gebildet ist und der den Abschnitt umgebende Teil des Trägers lichtundurchlässig ist, oder wobei das transluzente Trägerbauteil (14) durch einen Einsatz gebildet ist, der in einen Ausschnitt eines Trägers eingesetzt ist.

12. Innenverkleidungsteil nach einem der vorangehenden Ansprüche, wobei die Deckschicht (18) eine Folie umfasst, insbesondere eine TPO-, TPU-, TPE-, PO- oder PVC-Folie.

13. Innenverkleidungsteil nach Anspruch 12, wobei die Deckschicht (18) auf ihrer dem Trägerbauteil (14) zugewandten Rückseite mit einer Unterschicht versehen ist, wie einer PO- oder PU-Schaumschicht oder einer Abstandsgewebeschicht; und/oder wobei die Deckschicht (18) auf ihrer von dem Trägerbauteil (14) abgewandten Vorderseite mit einer Schutzschicht versehen ist.

14. Innenverkleidungsteil nach einem der vorangehenden Ansprüche, wobei an der Deckschicht (18) Befestigungstrukturen angeformt oder angebracht sind, insbesondere Clips, Rasthaken und/oder Ösen.

## Claims

1. An interior trim component for a motor vehicle, which comprises:
a translucent carrier component (14) with a front side and a rear side,
a translucent cover layer (18) formed from a translucent cover material on the front side of the carrier component (14), and a light source on the rear side of the carrier component (14),
wherein the combination of the carrier component (14) and the translucent cover layer (18) has a light permeability of 5% to 10% in the visible wavelength range, and
**characterized in that**
the cover layer (18) in the form of a mat is loosely placed onto the carrier component (14) or is releasably connected to the carrier component (14).

2. The interior trim component according to claim 1, wherein the translucent cover material has a Shore A hardness in the range of 60 to 80 or of approximately 70.

3. The interior trim component according to claim 1 or 2, wherein the light source comprises a rear projection system (24), which can be controlled via an electronic control device.

4. The interior trim component according to claim 3, wherein the rear projection system can be controlled by means of the control device in order to display different static and/or moving images.

5. The interior trim component according to claim 3 or 4, wherein the control device is a computing system, such as a smart phone, a smart watch, a tablet computer, or another portable computing device, which is separated from the motor vehicle.

6. The interior trim component according to one of claims 1 and 2, wherein the light source comprises a light guide plate or optical fiber, a light guide film, a polyoptic textile or nonwoven fabric, a molded-on light guide, a reflector, an LED light source, such as an LED film, a laser light source, an electroluminescence component, a light box, or a combination thereof.

7. The interior trim component according to one of the preceding claims, wherein the interior trim component comprises a storage tray or storage compartment of the motor vehicle, and the light source illuminates a section of the storage tray or storage compartment that is visible to passengers of the motor vehicle.

8. The interior trim component according to one of the preceding claims, wherein the translucent cover material has a light permeability of approximately 12% in the visible wavelength range.

9. The interior trim component according to one of the preceding claims, wherein the light permeability of the carrier component (14) is higher than the light permeability of the cover material by a factor of 10 or more.

10. The interior trim component according to one of the preceding claims, wherein the cover layer (18) is provided, in particular imprinted, with a graphic, an image, a pattern, a structure, or combinations thereof, on its surface facing away from the carrier component (14) and/or on its surface facing the carrier component (14), in particular in order to create a 3D or Moire effect.

11. The interior trim component according to one of the preceding claims, wherein the translucent carrier component (14) is formed by a portion of a carrier, and the section of the carrier surrounding the portion is light impermeable, or wherein the translucent carrier component (14) is formed by means of an insert, which is inserted into a cutout of a carrier.

12. The interior trim component according to one of the preceding claims, wherein the cover layer (18) comprises a film, in particular a TPO, TPU, TPE, PO, or PVC film.

13. The interior trim component according to claim 12, wherein the cover layer (18) is provided with an underlayer, such as a PO or PU foam layer or a spacer fabric layer on its rear side facing the carrier component (14); and/or wherein the cover layer (18) is provided with a protective layer on its front side facing away from the carrier component (14).

14. The interior trim component according to one of the preceding claims, wherein fastening structures, in particular clips, latching hooks and/or eyelets are molded or attached to the cover layer (18).

## Revendications

1. Partie de garniture intérieure pour un véhicule à moteur, qui comprend :
un composant de support translucide (14) avec un côté avant et un côté arrière,
une couche de recouvrement translucide (18) constituée d'un matériau de recouvrement translucide sur le côté avant du composant de support (14) et une source de lumière sur le côté arrière du composant de support (14),
dans laquelle l'élément composite constitué du composant de support (14) et de la couche de recouvrement translucide (18) présente une transparence de 5 % à 10 % dans le domaine des longueurs d'ondes visibles et
**caractérisée en ce que**
la couche de recouvrement (18) est posée librement sous la forme d'un tapis sur le composant de support (14) ou est reliée de manière amovible avec le composant de support (14).

2. Partie de garniture intérieure selon la revendication 1, dans laquelle le matériau de recouvrement translucide présente une dureté Shore A de l'ordre de 60 à 80 ou d'environ 70.

3. Partie de garniture intérieure selon la revendication 1 ou 2, dans laquelle la source de lumière comprend un système de rétro-projection (24) qui peut être contrôlé par l'intermédiaire d'un dispositif de commande électronique.

4. Partie de garniture intérieure selon la revendication 3, dans laquelle le système de rétro-projection peut être contrôlé par le dispositif de commande afin d'afficher différentes images statiques et/ou animées.

5. Partie de garniture intérieure selon la revendication 3 ou 4, dans laquelle le dispositif de commande est un système de calcul séparé du véhicule à moteur, comme un smartphone, une smartwatch, une tablette ou un autre dispositif de calcul portatif.

6. Partie de garniture intérieure selon l'une des revendications 1 et 2, dans laquelle la source de lumière comprend une plaque conductrice de lumière ou une fibre optique, un film conducteur de lumière, un textile ou une toison polyoptique, un guide d'ondes moulé, un réflecteur, une source de lumière à LED, comme un film à LED, une source de lumière laser, un composant électroluminescent, un caisson lumineux ou une combinaison de ceux-ci.

7. Partie de garniture intérieure selon l'une des revendications précédentes, dans laquelle
la partie de garniture intérieure comprend un compartiment de dépôt ou un compartiment de rangement du véhicule à moteur et la source de lumière éclaire une partie du compartiment de dépôt ou du compartiment de rangement visible pour les passagers du véhicule à moteur.

8. Partie de garniture intérieure selon l'une des revendications précédentes, dans laquelle le matériau de recouvrement translucide présente une transparence d'environ 12 % dans le domaine des longueurs d'ondes visibles.

9. Partie de garniture intérieure selon l'une des revendications précédentes, dans laquelle la transparence du composant de support (14) est supérieur d'un facteur 10 ou plus par rapport à la transparence du matériau de recouvrement.

10. Partie de garniture intérieure selon l'une des revendications précédentes, dans laquelle la couche de recouvrement (18) est munie, sur sa surface opposée au composant de support (14) et/ou sur sa surface orientée vers le composant de support (14), d'un graphisme, d'une image, d'un motif, d'une structure ou d'une combinaison de ceux-ci, plus particulièrement imprimé, plus particulièrement afin de produire un effet 3D ou moiré.

11. Partie de garniture intérieure selon l'une des revendications précédentes, dans laquelle le composant de support (14) est constitué d'une portion d'un support et la partie du support entourant cette portion est opaque ou dans laquelle le composant de support translucide (14) est constitué d'un insert qui est inséré dans une découpe d'un support.

12. Partie de garniture intérieure selon l'une des revendications précédentes, dans laquelle la couche de recouvrement (18) comprend un film, plus particulièrement un film TPO, TPU, TPE, PO ou PVC.

13. Partie de garniture intérieure selon la revendication 12, dans laquelle la couche de recouvrement (18) est munie, sur son côté arrière orienté vers le composant de support (14), d'une sous-couche, comme une couche de mousse PO ou PU ou d'une couche de tissu de séparation ; et/ou dans laquelle la couche de recouvrement (18) est munie, sur son côté avant opposé au composant de support (14), d'une couche protectrice.

14. Partie de garniture intérieure selon l'une des revendications précédentes, dans laquelle, sur la couche de recouvrement (18) sont formées ou apposées des structures de fixation, plus particulièrement des clips, des crochets d'encliquetage et/ou des oeillets.
